# EUROPEAN PATENT SPECIFICATION

(11) **EP 3 266 550 B1**
(45) Date of publication and mention of the grant of the patent: **15.05.2019**
(21) Application number: 17177586.9
(22) Date of filing: 23.06.2017
(51) Int. Cl.: B23K 9/12, B23K 9/20

(54) **JOINING APPARATUS FOR JOINING A JOINING ELEMENT ONTO A WORKPIECE**
FÜGEVORRICHTUNG ZUM FÜGEN EINES FÜGEELEMENTES AUF EIN WERKSTÜCK
APPAREIL D'ASSEMBLAGE POUR ASSEMBLER UN ÉLÉMENT DE JONCTION SUR UNE PIÈCE À USINER

(30) Priority: 06.07.2016 DE 102016112387
(43) Date of publication of application: 10.01.2018
(73) Proprietor: Newfrey LLC, New Britain, CT 06053 (US)
(72) Inventor: Schneider, Michael, 35394 Gießen (DE)
(74) Representative: SBD IPAdmin

(56) References cited:
- EP-A1- 2 437 911
- DE-A1-102010 018 075

## Description

The present invention relates to a joining apparatus for joining a joining element onto or into a workpiece, comprising a joining head and a joining element holder which is fixed to the joining head by means of a fastening device and is configured to hold a joining element such that it can be axially joined to the workpiece, according to the preamble of claim 1 (see, for example, EP 2 437 911 B1).

In the field of joining apparatuses which are configured to join joining elements onto workpieces, for instance by way of so-called stud welding or by way of stud gluing, etc., it is known to feed joining elements in an automated manner to a joining head or a joining gun. The same is known in joining apparatuses in which joining elements such as punch rivets are driven into a workpiece.

On the joining head is provided a holding device, at which a joining element is held radially or on the outer periphery. In stud welding, a welding current can be conducted into the joining element via a holding apparatus of this type. The holding apparatus therefore generally has a high radial clamping force.

In joining apparatuses of this type, the feeding is effected such that joining elements are introduced by means of a joining element receiver radially into an axial feed channel, via which joining elements are fed from the rear into the holding apparatus. The joining elements then come to rest in the region of the holding apparatus, since they are braked by clamping jaws of the holding apparatus. After this, a loading pin is pressed by means of a loading pin actuator out of a feed position, in which the feed channel is freed, from the rear against the joining element, in order to press the latter into a holding position in the joining element holding device. The position of the loading pin can then be maintained during the joining process in order to axially support the joining element during such a process.

The joining element holding apparatus has on its end facing the joining element receiver a flange portion, by means of which the joining element holding device is pressable axially against a corresponding radially oriented end face of the joining element receiver. For the fastening, a cap nut, which presses from the other axial side against the flange of the holding device and is screwed onto an external thread of the joining element receiver, is in many cases used. The screw mounting is here generally intended to be effected with a certain torque, so that the end-face annular surfaces lie firmly one against the other. If blows are in this case applied to a screwing tool, such as an open-ended spanner, linear guides in the joining head can be damaged.

In addition, the electric welding current is transmitted via the end-face annular surfaces between joining element holding apparatus and joining element receiver.

Against the above background, it is an object of the invention to define an improved joining apparatus.

The above object is achieved in the joining apparatus stated in the introduction by virtue of the fact that the fastening device has a radial clamping ring, which presses the joining element holder radially against a joining head collar of the joining head.

With the joining apparatus according to the invention, preferably at least one of the following advantages is realizable.

Through the measure of fastening the joining element holder to the joining head, in particular to a joining element receiver, by means of a radial clamping ring, in this fastening operation no torque is transmitted to the joining head. As a result, existing linear guides can be spared.

In addition, an exchange of the joining element holder is easily possible, since, following the attachment of the joining element holder to the joining head, no cap nut has any longer to be brought over the joining element holder. Consequently, the joining element holder can also be installed or removed, for instance, when a gas nozzle is used in conjunction with the joining apparatus for stud welding. The same applies where a supporting foot is disposed radially close to the joining element holder. In this case too, a removal of such a supporting foot or of a gas nozzle is in the joining apparatus according to the invention not necessary in order to install or remove the joining element holder.

Through the measure of pressing the joining element holder radially against a joining head collar, a significantly larger surface area for the connection of these components can be used. Consequently, by means of this larger surface area, a low contact resistance can also be realized, so that via this surface area an electric welding current is transmissible, or perhaps some other current, for instance for operating an inductive heating apparatus.

The electric welding current can here be transmitted from the joining head collar to the joining element holder. The electric current can also however be conducted into the radial clamping ring and transmitted from there into the joining element holder. In both cases, this can be effected via a large shell surface, so that the contact resistance is reduced.

The object is thus fully achieved.

According to a particularly preferred embodiment, the radial clamping ring is configured as a U-ring, which peripherally embraces the joining element holder and the free ends of which can be pressed together by means of a clamping device.

The clamping device can act along a clamping axis which is oriented tangentially, in particular at an oblique angle, to a longitudinal axis of the joining element holder. The clamping device can be formed, in particular, by a screwing device, for instance by a screw which is pushed through a through hole in a free end of the radial clamping ring and is screwed into a thread of the other free end of the radial clamping ring in order to press the free ends tangentially together and hereby ultimately exert a radial clamping force on the joining element holder.

It is herein of particular advantage if the clamping device is configured such that a release of the clamping device results in the free ends of the radial clamping ring moving tangentially away from each other.

As a result, an active opening process can be realized, so that a removal of the joining element holder can be facilitated.

For instance, such a configuration of the clamping device can be realized by virtue of the fact that, in the free end against which a screw head of a screw of the clamping device is axially supported, the screw head is secured by means of an axial locking element, so that, when the screw is released, the head butts against the axial locking element and hereby forces the free ends tangentially apart. The axial locking element can be an elastically expandable axial locking ring, which is inserted in an axial locking groove of the clamping device. Alternatively, the axial locking element can be formed by a hollow screw with longitudinal opening. Access to the screw head of the clamping devices screw is then preferably made through the longitudinal opening. In an axial locking screw of this type, the active opening behaviour can preferably be adjustable.

All in all, it is further advantageous if the joining element holder has a holder collar, which can be introduced axially between a radial outer side of the joining head collar of the joining head and a radial inner side of the radial clamping ring.

Through this measure, the fastening operation can substantially be effected by a simple axial movement.

It is here of particular benefit if the holder collar has at least one axial slot.

The axial slot can serve to ensure that the holder collar acquires in the radial direction a certain elasticity, so that the holder collar both on its radial inner side and on its radial outer side can establish a large-area contact against the joining head collar or against the radial clamping ring.

Preferably, the holding collar has at least three slots arranged distributed over the periphery, in particular at least four and preferably less than ten such slots. The axial slot or the axial slots emanate preferably from a free end of the holder collar, so that the holder collar is formed by a plurality of holder collar tongues.

In addition, it is advantageous if the joining element holder has an assembly accessory, by means of which it is detectable whether the joining element holder is inserted axially sufficiently deeply into the radial clamping ring.

In particular, it can hereby be detectable whether the holder collar is inserted axially sufficiently deeply into the radial clamping ring. The assembly accessory can have, for instance, a stop flange on the joining element holder, which stop flange in a fastening position bears against a bottom side of the radial clamping ring.

It is of particular benefit if the assembly accessory on a holder collar of the joining element holder has a guide groove, which has a groove peripheral portion which extends in the peripheral direction and in which a pin connected to the radial clamping ring engages.

It is hereby possible to detect or to confirm an axially correct insertion position of the joining element holder into the radial clamping ring by twisting of the joining element holder in relation to the joining head through an angular range which is preferably greater than 50° and preferably less than 90°. The groove peripheral portion extending in the peripheral direction is preferably connected either to an axially extending groove axial portion which extends towards a free end of the holder collar, or alternatively the groove peripheral portion extending in the peripheral direction can be connected to a groove portion extending obliquely or helically towards the free end of the holder collar. When the holder collar is introduced into the radial clamping ring, the pin then engages firstly into this groove axial portion or the other oblique groove portion and can then, once the holder collar is inserted axially sufficiently deeply into the radial clamping ring, be moved into the groove peripheral portion extending in the peripheral direction by twisting of the joining element holder in relation to the radial clamping ring.

In order to check whether such twisting has taken place, on the radial clamping ring and on the joining element holder in the peripheral direction can be provided mutually coordinated markings, for instance a marking on an outer periphery of the holder collar, which marking is detectable, given full twisting, through an observation window in the radial clamping ring.

An electric joining energy, for instance in the form of an electric welding current, can be variously transmitted from the joining head to the joining element holder.

In many cases, it is here preferred if the joining head has an insulating sleeve, which forms the joining head collar against which the joining element holder is pressable by means of the radial clamping ring.

As a result, an electrical insulation is made between the radial clamping ring and the joining head.

In such cases, the radial clamping ring and also the joining element holder are preferably produced from an electrically conducting material, in particular from a steel, so that electric joining energy is transmissible therebetween.

As a result of this measure, the radial clamping ring is here preferably fully electrically insulated from the joining head, and in particular from a joining element receiver.

It is here of particular benefit if the radial clamping ring is mounted axially on the insulating sleeve.

In other cases, the radial clamping ring can be axially mounted directly on the joining head. In both cases this leads to a situation in which, although the radial clamping ring is, where appropriate, twistable or radially/tangentially movable, it is mounted such that the radial clamping ring is fixed captively in relation to the joining head.

In the case of a mounting on the insulating sleeve, insulation from the joining head can herein be maintained.

All in all, it is advantageous if the radial clamping ring is connected to an electrical energy supply such that electric joining energy is transmissible from the energy supply via the radial clamping ring to a joining element held in the joining element holder.

The electric joining energy can be, for instance, an electric welding current, yet can also be an electric current which is used, for instance, for the inductive heating of a joining element in the form of an adhesive stud.

Through the measure of connecting the electrical energy supply directly to the radial clamping ring, via the large shell surface a welding current can be transmitted between the radial clamping ring and the joining element holder with low losses, due to the low contact resistance. Moreover, it is not necessary to electrically insulate other elements inside the joining head. For instance, it is not necessary to electrically insulate a loading pin, etc.

All in all, it is advantageous if the joining head collar, to which the joining element holder is fastenable by means of the radial clamping ring, is configured on a joining element receiver (where appropriate with the insulating sleeve), via which joining elements are feedable into an axial feed channel connected to the joining element holder or assigned thereto, wherein a loading pin is axially displaceable in relation to the joining element receiver in order to allow in a feed position the feeding of a joining element into the feed channel and to press a supplied joining element axially into a holding position in the joining element holder.

The joining elements are preferably joining studs having a shank portion and a flange portion, which latter has a greater diameter than the shank portion.

The joining element holder preferably has a plurality of clamping tongues extending substantially in the axial direction, which are configured to exert on the joining element, in particular on a shank of the joining element, a radial clamping force.

The clamping tongues preferably have three axial portions, a first axial portion adjacent to a joining element receiver, a second axial portion at the free end of the holder tongues, and an intervening, in particular conically tapered axial portion. The second axial portion is preferably configured substantially cylindrically on the inner side so as to be able to transmit electric joining energy in the form of a welding current or the like from the joining element holder via the clamping tongues.

In the joining element holder can be disposed, where appropriate, a sectional sleeve having a plurality of sectional tongues, which are radially and/or axially secured by one or more O-rings or the like and are radially expandable in order, for instance, to admit a flange of a large-flanged stud. All in all, at least one of the following technical problems is solved with the invention. Due to the fastening with a radial clamping ring, no torque is transmitted between the joining head and the fastening device, so that, for instance, no torques are transmitted to linear guides in the joining head. In the prior art, the fastening was frequently made by means of a cap nut which was tightened with a predefined torque. Due to stiffness of the thread, the torque could be distorted, however, and a current conduction could not always be ensured.

An end stop of the joining element holder is hence in the invention not defined via a tightening torque of a cap nut, but rather can be effected via a stop flange and/or via an assembly accessory, wherein a radial turning of the joining element holder over a defined angle is effected without axial movement in order to realize an end position control.

In the prior art, electric joining energy is transmitted generally via diverse components, wherein losses are respectively incurred as a result of contact resistances. Preferably, according to the invention, electric joining energy is introduced directly into the radial clamping ring and from there into the joining element holder, so that contact resistances are reduced.

Whilst in the prior art an annular flange forms a transmission surface for the welding current, according to the invention a transmission of an electric joining energy is effected via a large shell surface between the joining element holder and the radial clamping ring (or the joining element receiver).

The joining element holder is preferably insulated in relation to the joining element receiver, so that a costly insulation of inner components of the joining head can be dispensed with, in particular an insulation of the loading pin.

Obviously the above-stated features and the features yet to be described below are usable not only in the respectively stated combination, but also in other combinations or in isolation, without departing from the scope of the present invention defined by the appended claims.

Illustrative embodiments of the invention are represented in the drawing and explained in greater detail in the following description, wherein:
- Fig. 1: shows a schematic representation of an embodiment of a joining apparatus according to the invention;
- Fig. 2: shows a cross-sectional view through the joining apparatus of Fig. 1, in the region of a radial clamping ring;
- Fig. 3: shows a longitudinal cross-sectional view of the joining apparatus along a line III-III of Fig. 2,
- Fig. 4: shows a schematic representation of a joining element holder of the joining apparatus of Figs. 1 to 3, and
- Fig. 5: shows an alternative embodiment of a joining element holder.

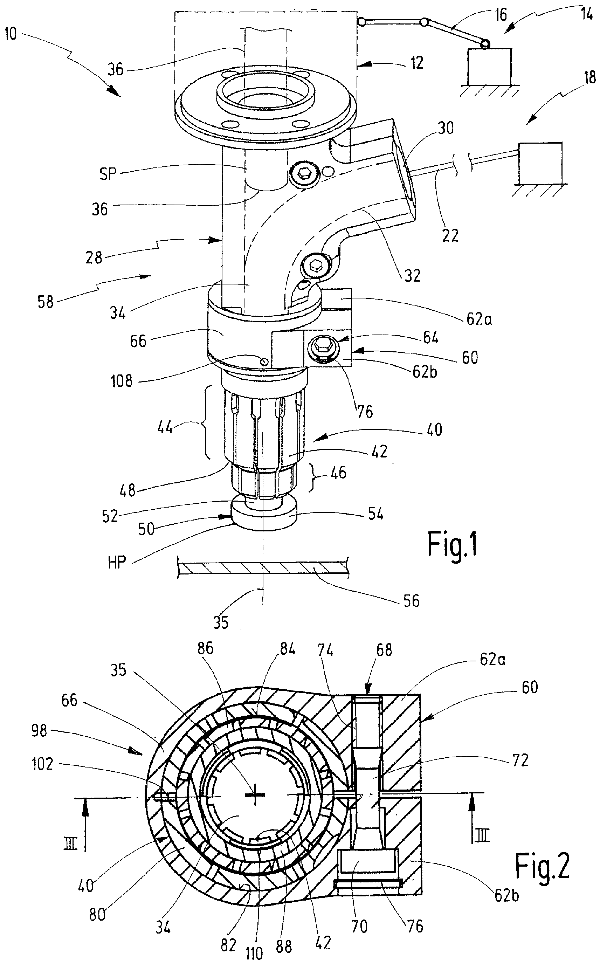

In Fig. 1, a joining apparatus is represented schematically and denoted in general terms by 10.

The joining apparatus 10 has a joining head 12, which is movable by means of a robot 14 three-dimensionally freely in space, preferably via an arm 16. In addition, the joining apparatus 10 contains a feed device 18 for joining elements. The feed device 18 has a separating device 20, as well as a feed tube 22 via which separated joining elements are fed to the joining head 12.

On the joining head 12 is provided a joining element receiver 28. The joining element receiver 28 has an inlet opening 30 for joining elements, wherein the inlet opening 30 opens out into an inlet channel 32. The substantially radially oriented inlet channel 32 then passes within the joining element receiver into a feed channel 34, which is oriented along a longitudinal axis 35.

A loading pin 36 is arranged coaxially to the longitudinal axis 35 and is movable in the axial direction relative to the joining element receiver. In Fig. 1, the loading pin 36 is shown in a feed position SP, in which a front end of the loading pin 36 frees the inlet channel 32, such that a joining element can be conveyed via the inlet channel 32 into the feed channel 34.

To the joining head 12 is fastened a joining element holding device 40. The joining element holding device 40 has a plurality of holding tongues 42, which are arranged distributed over the periphery and are arranged jointly coaxial to the longitudinal axis 35. The holding tongues 42 have a first axial portion 44, which is adjacent to the joining element receiver 28, as well as a second axial portion 46 at the free end of the holding tongues 42. The second axial portion 46 is configured cylindrically on the inner periphery. Between the first and the second axial portion 44, 46 is provided a third axial portion 48, which is configured as a conical portion via which a transition is made from a large internal diameter of the holding tongues 42 in the region of the first axial portion 44 into a smaller axial internal diameter of the third axial portion 48.

In Fig. 1 is shown that the joining element holding device 40 is holding a joining element 50. The joining element 50 has a shank portion 52 and a flange portion 54, wherein the flange portion has a greater external diameter than the shank portion 52.

The joining element 52 is shown in a holding position HP, in which the third axial portion 48 of the holding tongues 42 embraces the shank portion 52 and exerts on the latter a radial clamping force. Via the shell surface contact between the holding tongues 42 and the shank portion 52, in so-called stud welding an electric welding current can be transmitted.

The joining apparatus 10 serves to join a joining element 50 held in the joining element holding device 40 onto a surface of a workpiece 56, which can be configured, for instance, as a metal sheet.

The joining apparatus 10 can also be configured, however, to glue or otherwise join such a joining element 50 onto a workpiece.

The joining element holding device 40 is fastened by means of a fastening device 58 to the joining head 12, in particular to the joining element receiver 28.

In the present case, the fastening device 58 is formed by a radial clamping ring 60, which is configured as an open ring or as a U-ring having two free ends 62a, 62b. The free ends 62a, 62b are connected to each other via a ring portion 66 and can be pressed together in the tangential direction by means of a clamping device 64 in order to generate a radially inwardly directed clamping force over the ring portion 66.

The clamping device 64 can be formed, for instance, by a screw 68 which has a screw head 70 and a screw shank 72, as is shown in Fig. 2. On the screw shank 72 can be configured an external thread, which engages in an internal thread of the first free end 62a. The head 70 can herein be supported against a shoulder (not identified more closely) of the second free end 62b, so that, by tightening of the thread engagement 74 thus formed, the free ends 62a, 62b are movable closer to each other in the tangential direction in order to generate the radial clamping force.

On the free end 62b against which the screw head 70 bears, in a bore for the reception of the screw head 70 can be inserted an axial locking element, which on the one hand has the function that the screw 68 is captively fixed on the second free end 62b. On the other hand, the axial locking element also serves, however, as a measure to enable a so-called active opening of the radial clamping ring 60. When the thread engagement 74 is released, the screw head 70 is supported against the axial locking element 76, so that, upon the release of the thread engagement 74, the free ends 62a, 62b are forcibly moved away from each other in the tangential direction. The axial locking element can be formed as a radially elastically deformable axial locking ring. The axial locking element can also be configured, however, as a hollow axial locking screw. A longitudinal opening of a hollow screw of this kind can enable access to a twisting feature on the screw head 70. On the inner periphery of the longitudinal opening of the hollow screw can additionally be configured a feature for exerting a torque on the hollow screw, for instance a hexagonal contour.

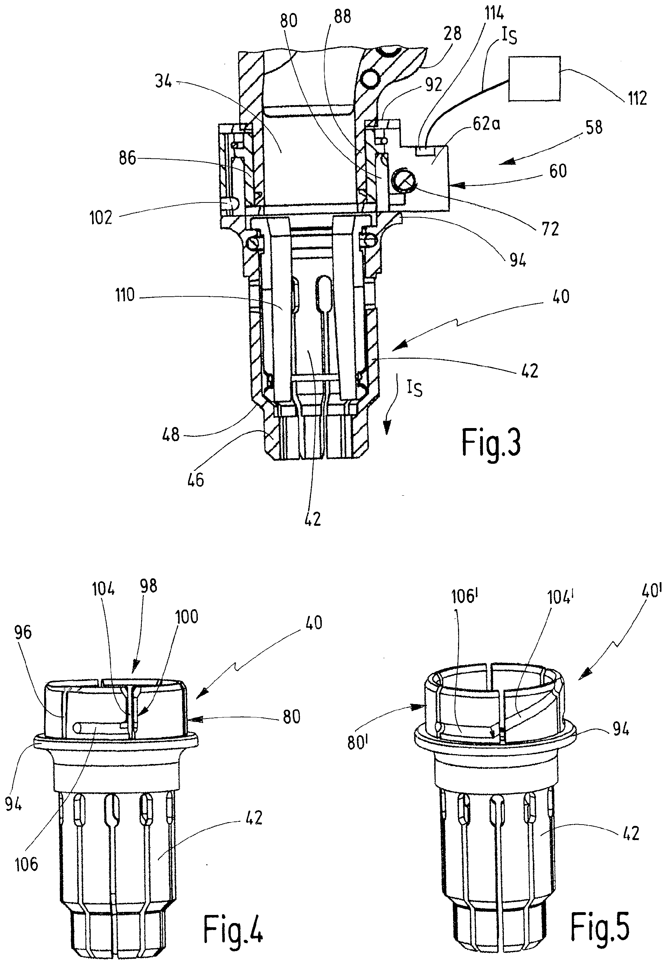

As is shown in Figs. 3 to 5, the joining element holding device or the joining element holder 40 has at an axial end the holding tongues 42. At the other axial end, the joining element holding device 40 has a holder collar 80, which is configured as an annular collar.

As is represented in Figs. 2 and 3, the holder collar 80 can be inserted in the axial direction into a region between a radial inner side 82 of the radial clamping ring 66 or of the ring portion 66 and between a radial outer side 84 of a joining head collar 86. The joining head collar 86 can be formed by the joining element receiver 28. In the present case, on a receiver collar 88 of the joining element receiver 28, however, is slipped an insulating sleeve 86, which forms the joining head collar 86. The insulating sleeve 86 is produced from an electrically insulating material.

As is shown in Fig. 3, the radial clamping ring 60 is secured via a schematically indicated axial mounting 92 axially in relation to the insulating sleeve 86, such that the radial clamping ring 60 is captively fastened or mounted in relation to the insulating sleeve 86 and thus in relation to the joining head, to be precise preferably in a detachable manner.

In addition, it can be seen in Figs. 3 to 5 that the joining element holding device 40 has in an axial region between the holding tongues 42 and the holder collar 80 an axial stop 94 in the form of a radially protruding flange portion. In an axial fastening position of the joining element holding device 40, the axial stop 94 bears against a radially oriented bottom side of the radial clamping ring 60, as is represented in Fig. 3.

In Figs. 4 and 5, it is further represented that the holding collar 80 has a plurality of, for instance six, axial slots 96, which extend from the free end of the holder collar 80 in the direction of the axial stop 94, such that the holder collar 80 is formed by a plurality of holder collar tongues which are arranged distributed over the periphery and are radially elastic.

In addition, it can be seen in Figs. 2, 3, 4 and 5 that the joining apparatus 10 has an assembly accessory 98. The assembly accessory serves to detect whether, in an assembly of the joining element holding device 40, the latter is slipped axially far enough into the joining head 12 or onto the joining head collar. For this purpose, the assembly accessory 98 has in the present case a guide groove 100, which is configured on the holder collar 80. In the guide groove 100 can engage a pin 102, which is rigidly connected to the radial clamping ring 60. The pin 102 projects radially inwards in relation to the radial inner side 82 of the radial clamping ring 60.

The guide groove 100 contains a groove axial portion 104, as is represented in Fig. 4. The groove axial portion 104 can be configured on one of the axial slots 96. The groove axial portion 104 enables a purely axial introduction of the holder collar 80 into the radial clamping ring 60. The guide groove 100 further contains a groove peripheral portion 106, which is oriented in the peripheral direction and is connected to the groove axial portion 104. Insofar as the pin 102, given sufficient axial insertion of the joining element holding device 40 into the radial clamping ring 60, bears against the axial end of the groove axial portion 104, the joining element holding device 40 can be twisted in relation to the radial clamping ring 60 in the peripheral direction, to be precise through an angle corresponding to the peripheral length of the groove peripheral portion 106. The angle can, for instance, be greater than 5° and be less than 90°, and can in particular be less than 50° and greater than 10°.

In the assembly of the joining element holding device 40, the fitter can hence confirm or detect a sufficient axial insertion depth by being able to twist the joining element holding device 40 in relation to the radial clamping ring 60, due to the engagement of the pin 102 in the groove peripheral portion 106.

In order to detect whether such twisting has also actually taken place, consistent markings can be provided at specific turning positions of radial clamping ring 60 and joining element holding device 40. In the present case, the radial clamping ring 60 has an observation window 108, through which a marking, situated on the outer periphery, on the holder collar 80 can be seen as soon as the pin 102 has reached that peripheral end of the groove peripheral portion 106 which lies opposite the groove axial portion 104.

At 110 is further shown in Figs. 2 and 3 a sectional sleeve, which has a plurality of, in the present case three, axially extending sections, which are radially held together via an upper O-ring and are axially secured in relation to the joining element holding device 40. A lower end of the sections of the sectional sleeve 110 can be secured by a further O-ring. The sectional sleeve 110 is preferably disposed within the joining element holding device 40 and extends over the first axial portion 44 thereof and the second axial portion 46 thereof. Upon radial expansion of the sections of the sectional sleeve 110, a joining flange of a joining element which is fed via the feed channel 34 passes through these sections and then comes to a halt in a region between an axial end of the sectional sleeve 110 and the third axial portion 48 of the holding tongues 42. This position is also referred to as the intermediate position, out of which the joining element is then movable into the holding position HP shown in Fig. 1, by the loading pin 36 pushing the joining element from the rear through the joining element holding device 40.

In addition, in Fig. 3 can be seen that the joining apparatus 10 can have an electric energy supply 112, via which, for instance, an electric welding current Is can be provided.

On the radial clamping ring 60, appropriate connecting contacts 114 can be provided, for instance a single connecting contact, so that the welding current Is can be conducted into the radial clamping ring 60, and from there can be conducted directly via the shell surface between the radial inner side 82 and the outer side of the holding collar 80 into the joining element holding device 40, whence the welding current I_{S} can be conducted, via the radial contact of the second axial portion 46 against the shank portion 52 of the joining element 50, into the latter, in order to establish between the joining element 50 and the workpiece 56 an electric welding current by means of which an arc can be drawn in order to be able to perform a stud welding process as performed, for instance, in motor vehicle body construction.

An electric energy of the energy supply 112 can also however be used, for instance, to supply an inductive heating device in order to be able, for instance, to perform a stud gluing operation.

## Claims

1. Joining apparatus (10) for joining a joining element (50) onto or into a workpiece (56), comprising a joining head (12) and a joining element holder (40) which is fixed to the joining head (12) by means of a fastening device (58) and is configured to hold a joining element (50) such that it can be axially joined onto the workpiece (56),
**characterized in that**
the fastening device (58) has a radial clamping ring (60), which presses the joining element holder (40) radially against a joining head collar (86) of the joining head (12).

2. Joining apparatus according to Claim 1, **characterized in that** the radial clamping ring (60) is configured as a U-ring, which peripherally embraces the joining element holder (40) and the free ends (62a, 62b) of which can be pressed together by means of a clamping device (64).

3. Joining apparatus according to Claim 2, **characterized in that** the clamping device (64) is configured such that a release of the clamping device (64) results in the free ends (62a, 62b) of the radial clamping ring (60) moving tangentially away from each other.

4. Joining apparatus according to one of Claims 1 to 3, **characterized in that** the joining element holder (40) has a holder collar (80), which can be introduced axially between a radial outer side (84) of the joining head collar (86) of the joining head (12) and a radial inner side (82) of the radial clamping ring (60).

5. Joining apparatus according to Claim 4, **characterized in that** the holder collar (80) has at least one axial slot (96).

6. Joining apparatus according to Claim 4 or 5, **characterized in that** the joining element holder (40) has an assembly accessory (98), by means of which it is detectable whether the holder collar (80) is inserted axially sufficiently deeply into the radial clamping ring (60).

7. Joining apparatus according to Claim 6, **characterized in that** the assembly accessory (98) on the holder collar (80) has a guide groove (100), which has a groove peripheral portion (106) which extends in the peripheral direction and in which a pin (102) connected to the radial clamping ring (60) engages.

8. Joining apparatus according to one of Claims 1 to 7, **characterized in that** the joining head (12) has an insulating sleeve (86), which forms the joining head collar (86) against which the joining element holder (40) is pressable by means of the radial clamping ring (60).

9. Joining apparatus according to Claim 8, **characterized in that** the radial clamping ring (60) is mounted axially on the insulating sleeve (86).

10. Joining apparatus according to one of Claims 1 to 9, **characterized in that** the radial clamping ring (60) is connected to an electrical energy supply (112) such that electric joining energy (IS) is transmissible from the energy supply (112) via the radial clamping ring (60) to a joining element (50) held in the joining element holder (40).

11. Joining apparatus according to one of Claims 1 to 10, **characterized in that** the joining head collar (80), to which the joining element holder (40) is fastenable by means of the radial clamping ring (60), is configured on a joining element receiver (28), via which joining elements (50) are feedable into an axial feed channel (34) connected to the joining element holder (40), wherein a loading pin (36) is axially displaceable in relation to the joining element receiver (28) in order to allow in a feed position (SP) the feeding of a joining element (50) into the feed channel (34) and to press a supplied joining element (50) axially into a holding position (HP) in the joining element holder (40).

## Patentansprüche

1. Fügevorrichtung (10) zum Fügen eines Fügeelementes (50) auf oder in ein Werkstück (56), mit einem Fügekopf (12) und einem mittels einer Befestigungseinrichtung (58) an dem Fügekopf (12) festgelegten Fügeelement-Halter (40), der dazu ausgebildet ist, ein Fügeelement (50) so zu halten, dass es axial auf das Werkstück (56) gefügt werden kann,
**dadurch gekennzeichnet, dass**
die Befestigungseinrichtung (58) einen Radialklemmring (60) aufweist, der den Fügeelement-Halter (40) radial gegen einen Fügekopfbund (86) des Fügekopfes (12) drückt.

2. Fügevorrichtung nach Anspruch 1, **dadurch gekennzeichnet, dass** der Radialklemmring (60) als U- Ring ausgebildet ist, der den Fügeelement-Halter (40) umfänglich umgreift und dessen freien Enden (62a, 62b) mittels einer Spanneinrichtung (64) zusammendrückbar sind.

3. Fügevorrichtung nach Anspruch 2, **dadurch gekennzeichnet, dass** die Spanneinrichtung (64) so ausgebildet ist, dass ein Losen der Spanneinrichtung (64) dazu führt, dass die freien Enden (62a, 62b) des Radialklemmrings (60) sich tangential voneinander weg bewegen.

4. Fügevorrichtung nach einem der Ansprüche 1 bis 3, **dadurch gekennzeichnet, dass** der der Fügeelement-Halter (40) einen Halterbund (80) aufweist, der axial zwischen eine radiale Außenseite (84) des Fügekopfbundes (86) des Fügekopfes (12) und eine radiale Innenseite (82) des Radialklemmrings (60) einführbar ist.

5. Fügevorrichtung nach Anspruch 4, **dadurch gekennzeichnet, dass** der Halterbund (80) wenigstens einen Axialschlitz (96) aufweist.

6. Fügevorrichtung nach Anspruch 4 oder 5, **dadurch gekennzeichnet, dass** der Fügeelement-Halter (40) eine Montagehilfseinrichtung (98) aufweist, mittels der erkennbar ist, ob der Halterbund (80) axial hinreichend tief in den Radialklemmring(60) eingeführt ist.

7. Fügevorrichtung nach Anspruch 6, **dadurch gekennzeichnet, dass** die Montagehilfseinrichtung (98) an dem Halterbund (80) eine Führungsnut (100) aufweist, die einen sich in Umfangsrichtung erstreckenden Nutumfangsabschnitt (106) aufweist in den ein mit dem Radialklemmring (60) verbundener Stift (102) greift.

8. Fügevorrichtung nach einem der Ansprüche 1 bis 7, **dadurch gekennzeichnet, dass** der Fügekopf (12) eine Isolierhülse (86) aufweist, die den Fügekopfbund (86) bildet, gegen den der Fügeelement-Halter (40) mittels des Radialklemmrings (60) drückbar ist.

9. Fügevorrichtung nach Anspruch 8, **dadurch gekennzeichnet, dass** der Radialklemmring (60) axial an der Isolierhülse (86) gelagert ist.

10. Fügevorrichtung nach einem der Ansprüche 1 bis 9, **dadurch gekennzeichnet, dass** der Radialklemmring (60) mit einer elektrischen Energieversorgung (112) verbunden ist, derart, dass elektrische Fügeenergie (Iₛ) von der Energieversorgung (112) über den Radialklemmring (60) auf ein in dem Fügeelement-Halter (40) gehaltenes Fügeelement (50) übertragbar ist.

11. Fügevorrichtung nach einem der Ansprüche 1 bis 10, **dadurch gekennzeichnet, dass** der Fügekopfbund (80), an dem der Fügeelement-Halter (40) mittels des Radialklemmrings (60) befestigbar ist, an einem Fügeelement-Aufnahmer (28) ausgebildet ist, über den Fügeelemente (50) in einen mit dem Fügeelement-Halter (40) verbundenen axialen Zuführkanal (34) zuführbar sind, wobei ein Ladestift (36) axial verschieblich in Bezug auf den Fügeelement-Aufnehmer (28) ist, um in einer Zuführposition (SP) das Zuführen eines Fügeelementes (50) in den Zuführkanal (34) zu gestatten und um ein zugeführtes Fügeelement (50) axial in eine Halteposition (HP) in dem Fügeelement-Halter (40) zu drücken.

## Revendications

1. Dispositif d'assemblage (10) destiné à joindre un élément d'assemblage (50) sur ou dans une pièce de fabrication (56), comprenant une tête d'assemblage (12) et un support d'élément d'assemblage (40) qui est fixé à la tête d'assemblage (12) au moyen d'un dispositif de fixation (58) et est configuré pour tenir un élément d'assemblage (50) pour qu'il puisse être axialement assemblé sur la pièce de fabrication (56),
**caractérisé en ce que**
le dispositif d'assemblage (58) comporte une bague de serrage radiale (60), qui presse le support d'élément d'assemblage (40) radialement contre un collier de tête d'assemblage (86) de la tête d'assemblage (12).

2. Dispositif d'assemblage selon la revendication 1, **caractérisé en ce que** la bague de serrage radiale (60) est configurée comme une bague en U, qui épouse périphériquement le support d'élément d'assemblage (40) et dont les extrémités libres (62a, 62b) peuvent être pressées ensemble au moyen d'un dispositif de serrage (64).

3. Dispositif d'assemblage selon la revendication 2, **caractérisé en ce que** le dispositif de serrage (64) est configuré pour qu'une libération du dispositif de serrage (64) aboutisse à ce que les extrémités libres (62a, 62b) de la bague de serrage radiale (60) s'éloignent tangentiellement l'une de l'autre.

4. Dispositif d'assemblage selon l'une des revendications 1 à 3, **caractérisé en ce que** le support d'élément d'assemblage (40) comporte un collier de support (80), qui peut être introduit axialement entre un côté externe radial (84) du collier de tête d'assemblage (86) de la tête d'assemblage (12) et un côté interne radial (82) de la bague de serrage radiale (60).

5. Dispositif d'assemblage selon la revendication 4, **caractérisé en ce que** le collier de support (80) comporte au moins une fente axiale (96).

6. Dispositif d'assemblage selon la revendication 4 ou 5, **caractérisé en ce que** le support d'élément d'assemblage (40) comporte un accessoire d'assemblage (98), au moyen duquel on peut détecter si le collier de support (80) est inséré axialement suffisamment profondément dans la bague de serrage radiale (60).

7. Dispositif d'assemblage selon la revendication 6, **caractérisé en ce que** l'accessoire d'assemblage (98) du collier de support (80) comporte une rainure de guidage (100), qui comporte une portion périphérique de rainure (106) qui s'étend dans la direction périphérique et dans laquelle une cheville (102) reliée à la bague de serrage radiale (60) s'engage.

8. Dispositif d'assemblage selon l'une des revendications 1 à 7, **caractérisé en ce que** la tête d'assemblage (12) comporte un manchon isolant (86), qui forme le collier de tête d'assemblage (86) contre lequel le support d'élément d'assemblage (40) peut être pressé au moyen de la bague de serrage radiale (60).

9. Dispositif d'assemblage selon la revendication 8, **caractérisé en ce que** la bague de serrage radiale (60) est montée axialement sur le manchon isolant (86).

10. Dispositif d'assemblage selon l'une des revendications 1 à 9, **caractérisé en ce que** la bague de serrage radiale (60) est reliée à une alimentation en énergie électrique (112) de telle sorte que l'énergie de jonction électrique (IS) puisse être transmise de l'alimentation en énergie (112) via la bague de serrage radiale (60) à un élément d'assemblage (50) tenu dans le support d'élément d'assemblage (40).

11. Dispositif d'assemblage selon l'une des revendications 1 à 10, **caractérisé en ce que** le collier de support (80), auquel le support d'élément d'assemblage (40) peut être assujetti au moyen de la bague de serrage radiale (60), est configuré sur un récepteur d'élément d'assemblage (28), via lequel des éléments de jonction (50) peuvent être amenés dans un canal d'amenée axial (34) relié au support d'élément d'assemblage (40), dans lequel une cheville de chargement (36) peut être déplacée axialement par rapport au récepteur d'élément d'assemblage (28) afin de permettre dans une position d'amenée (SP), l'introduction d'un élément d'assemblage (50) dans le canal d'amenée (34) et de presser un élément d'assemblage (50) fourni axialement dans une position de retenue (HP) dans le support d'élément d'assemblage (40).
